# EUROPEAN PATENT SPECIFICATION

(11) **EP 2 330 321 B1**
(45) Date of publication and mention of the grant of the patent: **22.08.2012**
(21) Application number: 09809987.2
(22) Date of filing: 27.08.2009
(51) Int. Cl.: F16G 13/08, F16G 13/04, F16H 7/06, F16H 55/30

(54) **SILENT CHAIN POWER TRANSMITTING DEVICE**
KRAFTÜBERTRAGUNGSVORRICHTUNG MIT GERÄUSCHLOSER KETTE
DISPOSITIF DE TRANSMISSION DE PUISSANCE DE CHAÎNE SILENCIEUSE

(30) Priority: 29.08.2008 JP 2008220670
(43) Date of publication of application: 08.06.2011
(73) Proprietor: Honda Motor Co., Ltd., Minato-ku Tokyo 107-8556 (JP); Hitachi Powdered Metals Co., Ltd., Matsudo-shi Chiba 270-2295 (JP)
(72) Inventor: FUJIWARA Akira c/o Honda R&D Co., Ltd., Wako-shi Saitama 351-0193 (JP); HASEGAWA Masao c/o Hitachi Powdered Metals Co., Ltd., Matsudo-shi Chiba 270-2295 (JP)
(74) Representative: Herzog, Markus
(86) International application number: PCT/JP2009/064968
(87) International publication number: WO 2010/024337

(56) References cited:
- EP-A1- 0 284 860
- EP-A1- 0 933 557
- EP-A2- 1 281 890
- WO-A1-2007/069793
- JP-A- 8 184 348
- JP-A- 11 218 198
- JP-A- 63 254 249
- JP-A- 2001 193 803
- JP-A- 2001 355 684
- JP-A- 2003 202 056
- JP-A- 2007 162 836
- US-A- 3 495 468
- US-A1- 2001 007 842
- US-A1- 2004 097 314
- US-B1- 6 334 828

## Description

### Field of the invention

The present invention relates to a silent chain power transmitting device which is used, for example, for a motive force transmission device of an internal combustion engine.

### Description of the related art

Patent document 1 discloses a silent chain power transmitting device in which inside flank surfaces (flank surfaces) of link trains when the silent chain is linearly stretched are formed in a part of the tooth shape of a rack cutter which is capable of gear-cutting a sprocket used together with the silent chain.

Patent document 2 discloses a silent chain power transmitting device which is configured in such a manner that the link plate of the silent chain is provided with an inside flank and an outside flank which have the same shape as a cross sectional tooth shape formed in a direction of hob axis of a hob cutter, which makes a sprocket tooth. In the silent chain power transmitting device, the tooth tip part of the sprocket is formed to avoid a contact interference with the inside flank curved part of the link plate 11.

Patent document 3 discloses a silent chain power transmitting device in which a sprocket wheel meshed with each tooth portion of a silent chain is formed in a teeth shape which is created by using a rack having the same shape as the teeth outer shape of linearly-arranged first link plates having a desired outer shape. In the silent chain power transmitting device, the silent chain is comprised of second link plates, each of which has an outside flank smaller than that of the first link plate.

### Prior Art Documents

### Patent documents

Patent document 1: Japanese Unexamined Patent Application Publication No. 08-184348.

Patent document 2: Japanese Patent No. 3585463

Patent document 3: Japanese Unexamined Patent Application Publication No. 2006-161900.

In the silent chain power transmitting device disclosed in Patent document 1, however, the effect of preventing the noise made when the silent chain is seated is low because the polygonal movement of the silent chain when the silent chain is wound around the sprocket wheel and is seated on the sprocket wheel can not be prevented, although the collision of the silent chain and the sprocket wheel when meshing can be prevented since the silent chain which has moved straightly meshes with the sprocket wheel slidingly.

In the silent chain power transmitting device disclosed in Patent document 2, although the engagement position is moved from an inside flank to an outside flank gently in accordance with the rotation of the sprocket wheel, either one of the inside flank or the outside flank comes in contact with or is seated on the sprocket wheel, and thus the contact surface pressure applied on the tooth portion is large, which results in the earlier wear of the sprocket wheel and the link plate.

In the silent chain power transmitting device disclosed in Patent document 3, only the inside flank of the link plate collides with the tooth portion of the sprocket wheel, and thus a vibration caused by the collision of the outside flank and the tooth portion of the sprocket wheel is not generated, whereby the vibration noise can be reduced, however, the contact surface pressure applied to the tooth portion is large because only the inside flank comes in contact with or is seated on the sprocket wheel, which results in the early wear of the sprocket wheel and the link plate.

WO 2007/069793 A1 discloses a silent chain power transmitting device according to the preamble of claim 1.

US 3,495,468 A and EP 0 284 860 A1 show similar constructions.

EP 0 933 557 discloses a silent chain power transmitting device, comprising: a silent chain (1) which is formed in such a manner that a plurality of link plates (2) is connected with one another by connecting pins (31) in a chain shape, each of the link plates having a pair of tooth portions (21) and a pair of pin holes (22) into which the connecting pins are loosely fit, and a sprocket wheel (S) which includes on its circumference a plurality of tooth portions (t) which meshes with the tooth portions of the silent chain, wherein a meshing surface of each tooth portion of the sprocket wheel includes an inner seating portion on which an inside flank (23) of the link plate is seated and an outer seating portion on which the outside flank (24) of the link plate is seated, and wherein the engagement of the silent claim (1) and the sprocket wheel (S) starts from a contact of the inside flank of the link plate (point A) with the inner seating portion, and in accordance with a rotation of the sprocket wheel, the outside flank of a link plate which comes immediately before the link plate is seated on the outer seating portion while the contact of the inside flank of the link plate with the inner seating portion is kept.

### SUMMARY OF THE INVENTION

The present invention is made in view of the above described problems, and an object thereof is to provide a silent chain power transmitting device which can reduce the wear-loss of tooth portions. The invention provides a silent chain power transmitting device in accordance with claim 1.

The silent chain power transmitting device according to the present invention includes: a silent chain which is formed in such a manner that a plurality of link plates is connected with one another by connecting pins in a chain shape, each of the link plates having in a driving longitudinal direction a pair of tooth portions and a pair of pin holes into which the connecting pins are loosely fit, and a sprocket wheel which includes on its circumference a plurality of tooth portions which meshes with the tooth portions of the silent chain, wherein a meshing surface of each tooth portion of the sprocket wheel includes a plurality of seating portions, each of which is formed in a different tooth shape.

In accordance with the above configuration, because the meshing surface of the tooth portion of the sprocket wheel includes a plurality of seating portions, each of which is formed in a different tooth shape, each link plate is supported by the plurality of the seating portions. Therefore, a load applied to the link plate and the each tooth portion of the sprocket wheel is dispersed, whereby the wear of the tooth portions of the sprocket wheel and the link plate can be suppressed.

In the aforementioned silent chain power transmitting device, the plurality of the seating portions includes an inner seating portion on which the inside flank of the link plate is seated and an outer seating portion on which the outside flank of a link plate which comes before the link plate is seated.

In accordance with the above configuration, the inside flank of the link plate is seated on the inner seating portion which is formed in each tooth portion of the sprocket wheel while the outside flank of a link plate which comes immediately before the link plate is seated on the outer seating portion of the same tooth portion. In other words, the outside flank of one link plate is supported by the outer seating portion of the tooth portion of the sprocket wheel and the inside flank of the same link plate is supported by the inner seating portion of the preceding tooth portion of the sprocket wheel. Thus, the load applied on each tooth portion of the Link plate and the sprocket wheel is dispersed, whereby the wear of the tooth portion of the sprocket wheel and the link plate can be suppressed.

In the aforementioned silent chain power transmitting device, the inner seating portion may preferably be formed continuously on a tooth top side of the outer seating portion.

In the above configuration, as the inner seating portion is formed continuously on the tooth top side of the outer seating portion, the inner seating portion comes in contact with the inside flank of the link plate earlier than the outer seating portion, and the outside flank of the link plate is seated on the outside flank of the link plate while the contact between the inner seating portion and the inside flank of the link plate is kept. Therefore, wear of the tooth portions of the sprocket wheel and the link plate can be suppressed and the noise made when the link plate is seated on the sprocket wheel can be reduced.

In the aforementioned silent chain power transmitting device, the outer seating portion has a shape which is formed by using an outside flank rack having the same shape as an outer shape of ideal outside flank link plates formed when the ideal link plates are arranged linear each of the ideal outside flank link plates having an inside flank and an outside flank having the same shape as the outside flank of the link plate, and the inner seating portion has a shape which is formed by using an inside flank rack having the same shape as an outer shape of ideal inside flank link plates formed when the ideal inside flank link plates are arranged linear, each of the ideal inside flank link plates including an inside flank and an outside flank having the same shape as the inside flank of the link plate.

In the above configuration, the inside flank of the link plate slidingly comes in contact with the inner seating portion of the sprocket wheel and the outside flank of the link plate slidingly comes in contact with the sprocket wheel, and thus the noise generated when the link plate is seated on the sprocket wheel can be made extremely small.

The silent chain is formed in such a manner that a plurality of link plates is connected with one another by connecting pins in a chain shape, each of the link plates having in a driving longitudinal direction a pair of tooth portions and a pair of pin holes into which the connecting pins are loosely fit, and a sprocket wheel which includes on its circumference a plurality of tooth portions which meshes with the tooth portions of the silent chain, wherein a meshing surface of each tooth portion of the sprocket wheel includes an inner seating portion on which an inside flank of the link plate is seated and an outer seating portion on which the outside flank of the link plate is seated, and wherein the engagement of the silent chain and the sprocket wheel starts from a contact of the inside flank of the link plate with the inner seating portion, and in accordance with a rotation of the sprocket wheel, the outside flank of a link plate which comes immediately before the link plate is seated on the outer seating portion while the contact of the inside flank of the link plate with the inner seating portion is kept.

In accordance with the above structure, the wear of the tooth portions of the sprocket wheel and the link plate can be suppressed and a noise made when the link plate is seated on the sprocket wheel can be reduced.

The silent chain power transmitting device can suppress the wear of the tooth portion can be provided.

### BRIEF DESCRIPTION OF THE DRAWINGS

Fig. 1 is a side view of a silent chain power transmitting device according to an embodiment of the present invention.
Fig. 2 is a side view of the link plate.
Fig. 3A is a side view of an ideal outside flank link plate for explaining a tool for forming tooth portions of a sprocket wheel.
Fig. 3B is a side view of the ideal outside flank link plates which are arranged linearly for explaining the tool for forming the tooth portions of the sprocket wheel.
Fig. 3C is a side view of a rack for an outside flank.
Fig. 4A is a side view of an ideal inside flank link plate for explaining the tool for forming the tooth portion of the sprocket wheel.
Fig. 4B is a side view of the ideal outside flank link plates which are arranged linearly for explaining the tool for forming the tooth portions of the sprocket wheel.
Fig. 4C is a side view of a rack for an inside flank for explaining the tool for forming the tooth portion of the sprocket wheel.
Fig. 5 is an enlarged side view of the tooth portion of the driven sprocket wheel.
Fig. 6A is a side view showing a status where the driven sprocket wheel and the silent chain are started to be engaged.
Fig. 6B is an enlarged view of the part X shown in Fig. 6A.
Fig. 7A is a side view showing a status where the engagement of the driven sprocket wheel and the silent chain has been advanced.
Fig. 7B is an enlarged view of the part Y shown in Fig. 7A.
Fig. 8A is a side view showing a status where the engagement of the driven sprocket wheel and the silent chain has been further advanced.
Fig. 8B is an enlarged view of the part Z shown in Fig. 8A.
Fig. 9A is a plain view of a silent chain used in examples of the present invention and comparative examples.
Fig. 9B is a side view of the silent chain.
Fig. 9C is an expanded perspective view of the silent chain.
Fig. 10A is a cross-sectional view showing the wear loss amount of the tooth portion of the sprocket wheel according to the example 1.
Fig. 10B is a cross-sectional view showing the wear loss amount of the tooth portion of the sprocket wheel according to the comparative example 1.
Fig. 11A is a cross-sectional view showing the wear loss amount of the tooth portion of the sprocket wheel according to the example 2.
Fig. 11B is a cross-sectional view showing the wear loss amount of the tooth portion of the sprocket wheel according to the comparative example 2.
Fig. 12A is a cross-sectional view showing the wear loss amount of the tooth portion of the sprocket wheel according to the example 3.
Fig. 12B is a cross-sectional view showing the wear loss amount of the tooth portion of the sprocket wheel according to the comparative example 3.

### DETAILED DESCRIPTION OF THE PREFERRED EMBODIMENTS

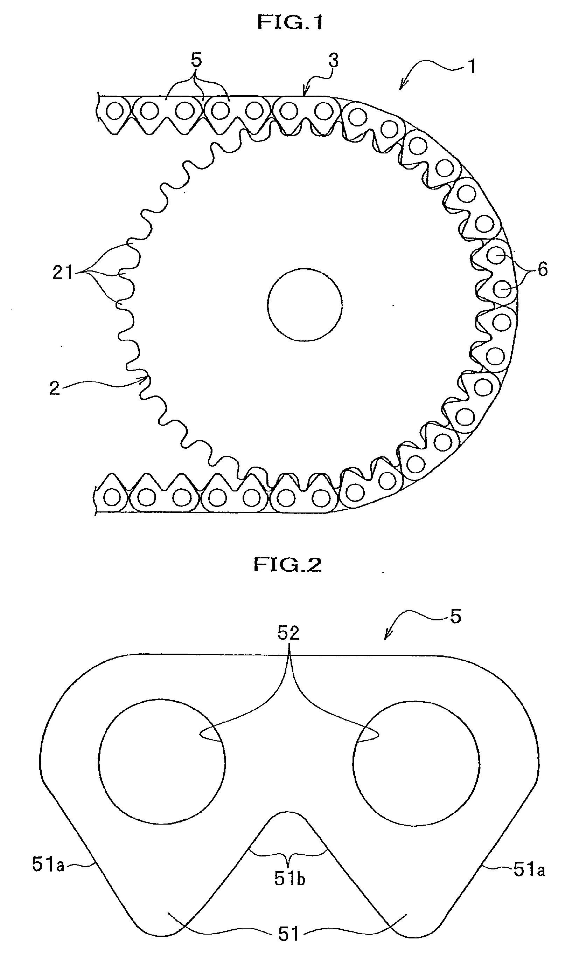

The best mode for carrying out the invention is described in detail with reference to the accompanying drawings. In the following description, the same components are assigned similar reference numerals, and the description thereof is omitted. Fig. 1 is a side view of a silent chain power transmitting device according to the present invention. Fig. 2 is a side view of a link plate.

As shown in Fig. 1, the silent chain power transmitting device 1 according to the present invention is a device which is used as a timing chain or an oil pump driving chain for an internal combustion engine of a vehicle or a general purpose machine, for example. The silent chain power transmitting device 1 includes a driving sprocket wheel 2, a driven sprocket wheel (not shown) which is arranged being spaced from the driving sprocket wheel 2, and an endless silent chain 3 which is wrapped around the driving sprocket wheel 2 and the driven sprocket wheel.

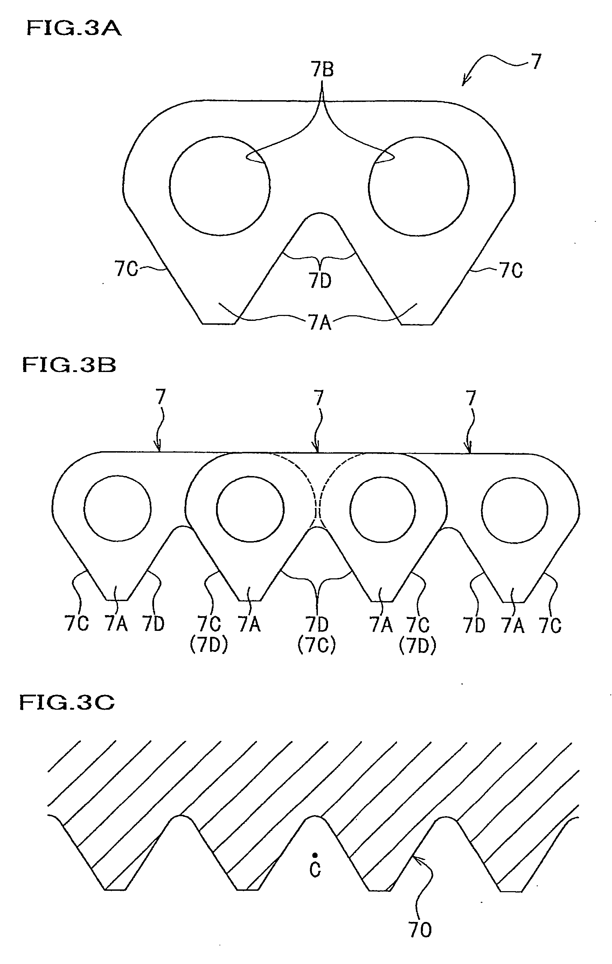

The driving sprocket wheel 2 (just referred to as "a sprocket wheel 2", hereinafter) includes on its circumference a plurality of tooth portions 21 which is meshed with tooth portions of the silent chain 3. The sprocket wheel 2 is connected, for example, to a crank shaft of an internal combustion engine, and is rotated by the operation of the internal combustion engine. Shape of each tooth portion 21 of the sprocket wheel 2 is described later with reference to Figs. 3 to 5.

The driven sprocket wheel has substantially the same structure as the sprocket wheel 2, and thus the description thereof will be omitted.

The silent chain 3 is formed by connecting a plurality of link plates 5 with connecting pins 6 in an endless chain shape.

As shown in Fig. 2, each link plate 5 is spaced from one another in a driving longitudinal direction of the silent chain 3 and has a pair of tooth portions 51, 51 having substantially a triangle shape in a side view. The outside flank (outside flank surface) 51a of the tooth portion 1 is formed linear. The inside flank (inside flank surface) 51b of the tooth portion 51 is formed to be a curved shape (i.e. an arched shape) expanding outward.

Each link plate 5 is spaced from one another in the driving longitudinal direction of the silent chain 3 and includes a pair of pin holes 52, 52. The inner diameter of the pin hole 52 is made a little larger than the outer diameter of the connecting pin 6 so that the connecting pin 6 is movably fitted into the pin hole 52.

Each link plate 5 is connected with one another by the connecting pins 6 in an endless chain shape with the tooth portion 51 facing inward.

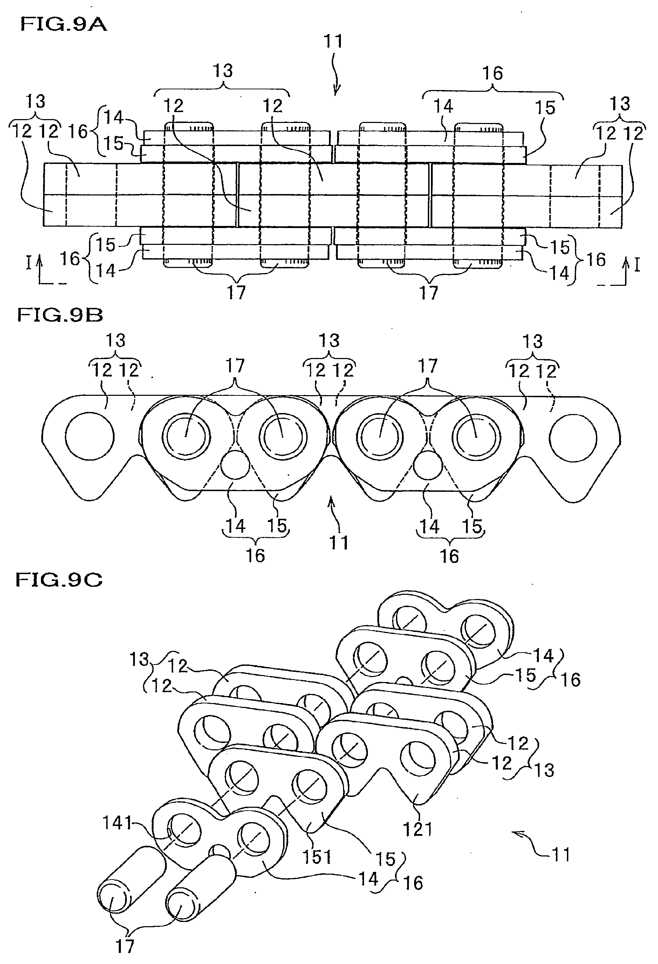

It is to be noted that guide plates (see Fig. 9) are mounted on both ends of the connecting pin 6.

Continuously referring to Figs. 3A to 5, the shape of the tooth portion 21 of the sprocket wheel 2 is described in detail.

Figs. 3A to 3C are drawings for explaining a tool for forming the tooth portions of the sprocket wheel. Fig. 3A is a side view of an ideal outside flank link plate. Fig. 3B is a side view showing the ideal outside flank link plates which are arranged linear. Fig. 3C is a side view of a rack for an outside flank.

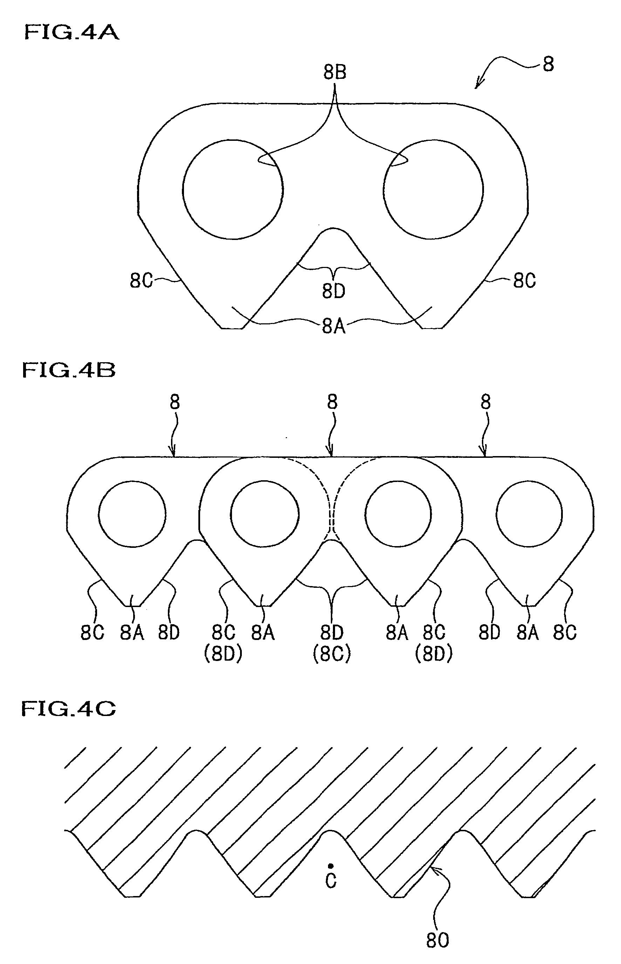

Figs 4A to 4C are drawings for explaining a tool for forming the tooth portions of the sprocket wheel. Fig. 4A is a side view of an ideal inside flank link plate. Fig. 4B is a side view showing ideal inside flank link plates which are arranged linear. Fig. 4C is a side view of a rack for an inside flank.

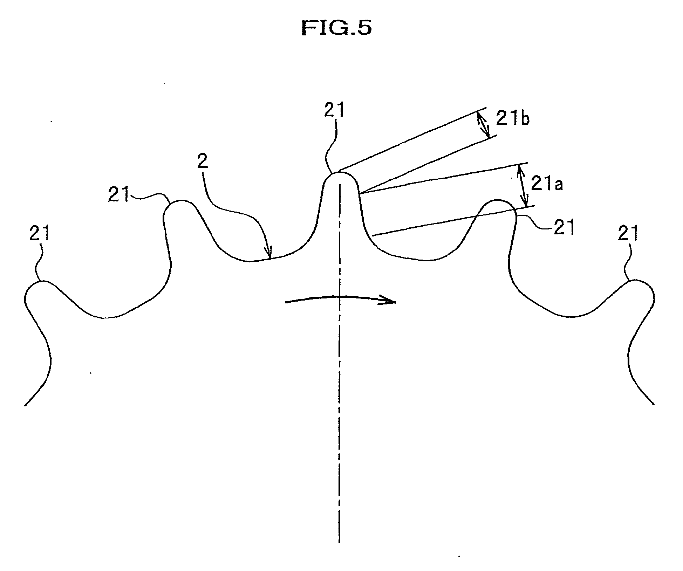

Fig. 5 is an enlarged side view of the tooth portion of the driven sprocket wheel.

The tooth portions 21 of the sprocket wheel 2 are formed in two steps by using two types of gear cutting tools, which are an outside flank rack 70 (see Fig. 3C) and an inside flank rack 80 (see Fig. 4C), respectively. Hereinafter, the outside flank rack 70 and the inside flank rack 80 are described in this order.

In the first step of forming the tooth portion 21, the tooth portion 21 of the sprocket wheel 2 is, as shown in Fig. 3A, formed by using an ideal outside flank link plate 7 which has a desired outer shape. The outside flank link plate 7 includes a pair of tooth portions 7A and a pair of pin holes 7B as well as outer portions 7C and inner portions 7D. The outer portion 7C and the inner portion 7D of the outside flank link plate 7 are formed to be the same shape as that of the outer portion 51a of the link plate 5 shown in Fig. 2 (i.e. a linear shape).

Fig. 3B shows the outer shape of the tooth portions when a plurality of the ideal outside flank link plates 7 having such an outer shape is arranged linear.

In the first step of forming the tooth portions 21, the outside flank rack 70 for forming the sprocket wheel 2 has the same shape as the outer shape of the tooth portions formed when the outside flank link plates 7 are arranged linear as shown in Fig. 3C.

Thus, the tooth portions 21 of the sprocket wheel 2 are formed to be in a shape which is formed by gear cutting the sprocket wheel 2 by the outside flank rack 70 in the first step of forming.

The gear cutting by the outside flank rack 70 is performed such that the rotation center of the outside flank rack 70 is a midpoint C of the distance between the tooth portions of the outside flank rack 70, wherein the midpoint C is on a straight line which is parallel to the outside flank rack 70 and on which the thickness of the tooth portion of the outside flank rack 70 is equal to the distance between the tooth portions of the outside flank rack 70.

The tooth shape of the tooth portion 21 which is formed by the gear cutting by the outside flank rack 70, or more specifically the tooth shape of the outer seating portion 21a (see Fig. 5) becomes to be an involutes curve since the inner portion and the outer portion of the tooth portion of the outside flank rack 70 are in a linear shape.

In the second step of forming the tooth portions 21, the tooth portions 21 of the sprocket wheel 2 are formed by using an ideal inside flank link plate 8 which has a desired outer shape as shown in Fig. 4A. The inside flank link plate 8 includes a pair of tooth portions 8A and a pair of pin holes 8B as well as outer portions 8C and inner portions 8D. The outside flank 8C and the inside flank 8D of the inner link plate 8 are formed to be the same shape as the inner portion 51b of the link plate 5 shown in Fig. 2 (i.e. a curved shape expanding outward).

Fig. 4B shows the outer shape of the tooth portions when a plurality of the ideal inside flank link plates 8 having such an outer shape is arranged linearly.

In the second step of forming the tooth portions 21, the inside flank rack 80 for forming the sprocket wheel 2 has the same shape as the outer shape of the tooth portions formed when the inside flank link plates 8 are arranged linearly as shown in Fig. 4C.

Thus, the tooth portions 21 of the sprocket wheel 2 are formed to be in a shape which is formed by gear cutting the tooth top side of the tooth portion 21 by the inside flank rack 80 in the second step of forming. The gear cutting by the inside flank rack 80 is performed in such a manner that the rotation center of the inside flank rack 80 is a midpoint C of the distance between the tooth portions of the inside flank rack 80, wherein the midpoint C is on a straight line which is parallel to the inside flank rack 80 and on which the thickness of the tooth portion of the inside flank rack 80 is equal to the distance between the tooth portions of the inside flank rack 80.

The tooth shape of the tooth top side of the tooth portion 21 which is formed by the gear cutting by the inside flank rack 80, or more specifically the tooth shape of the inner seating portion 21b (see Fig. 5) becomes to be an arched shape since the inner portion and the outer portion of the tooth portion of the inside flank rack 80 are in a curved shape expanding outward.

In accordance with the two step formation described above, on the meshed surface of the tooth portion 21 of the sprocket wheel 2, the outer seating portion 21a coming in sliding contact with the outside flank 51a (see Fig. 2) of the link plate 5 is formed at a tooth base side and the inner seating portion 21b coming in sliding contact with the inside flank 51b (see Fig. 2) is formed at the tooth top side continuously with the outer seating portion 21a as shown in Fig. 5. In the embodiment, the pitch of the tooth portions 21 of the sprocket wheel 2 are set to be smaller than that of the tooth portions 1 of the link plate 5.

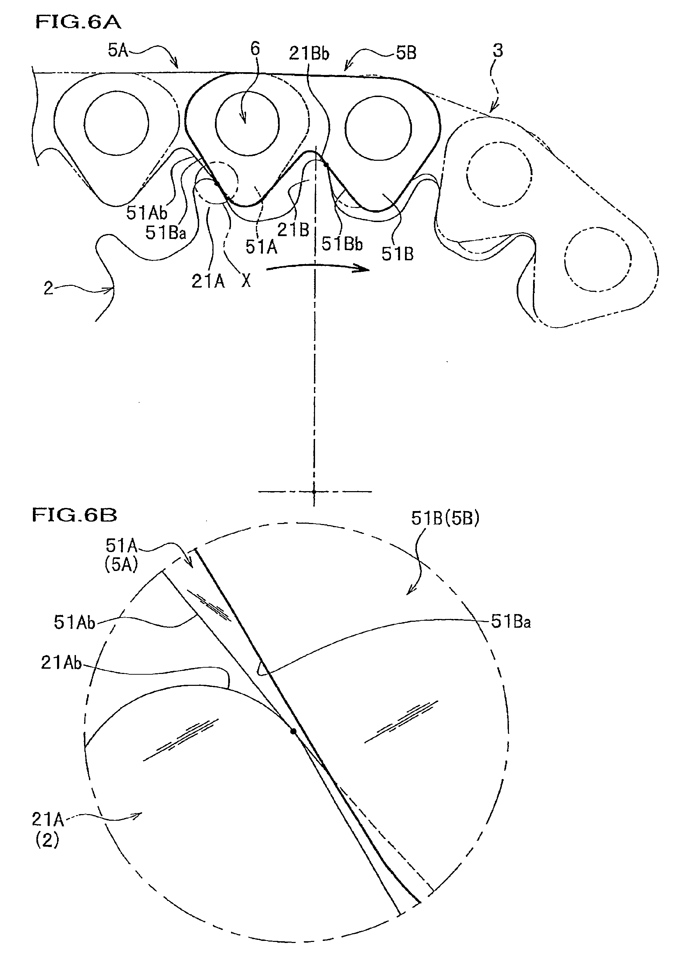

Continuously, the engagement of the sprocket wheel 2 and the silent chain 3 is described with reference to Figs 6A to 8B.

Fig. 6A is a side view showing a status where the driven sprocket wheel and the silent chain are started to be engaged. Fig. 6B is an enlarged view of the part X shown in Fig. 6A.

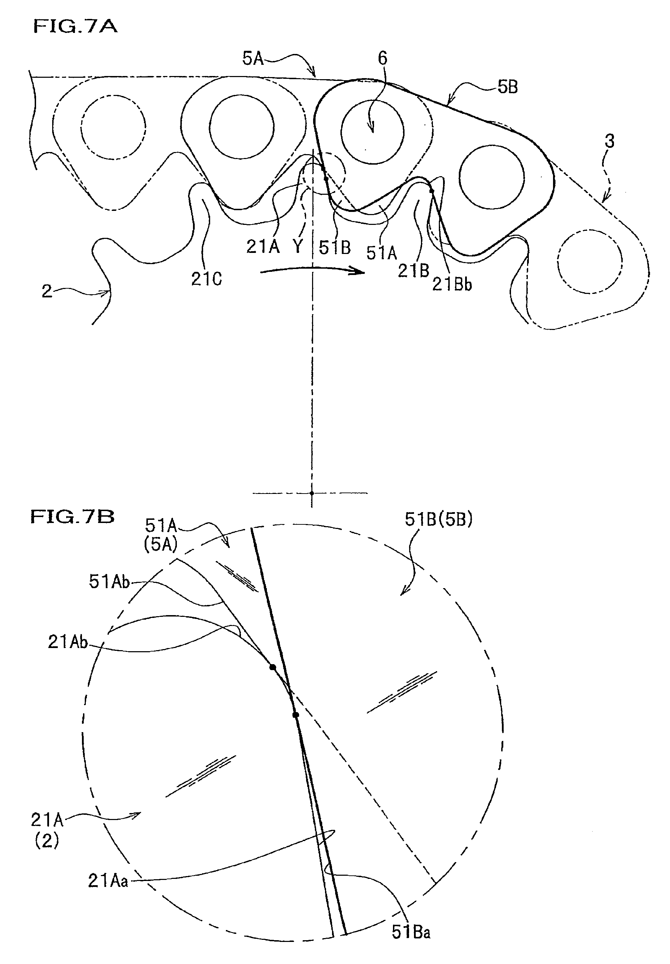

Fig. 7A is a side view showing a status where the engagement of the driven sprocket wheel and the silent chain has been advanced. Fig. 7B is an enlarged view of the part Y shown in Fig. 7A.

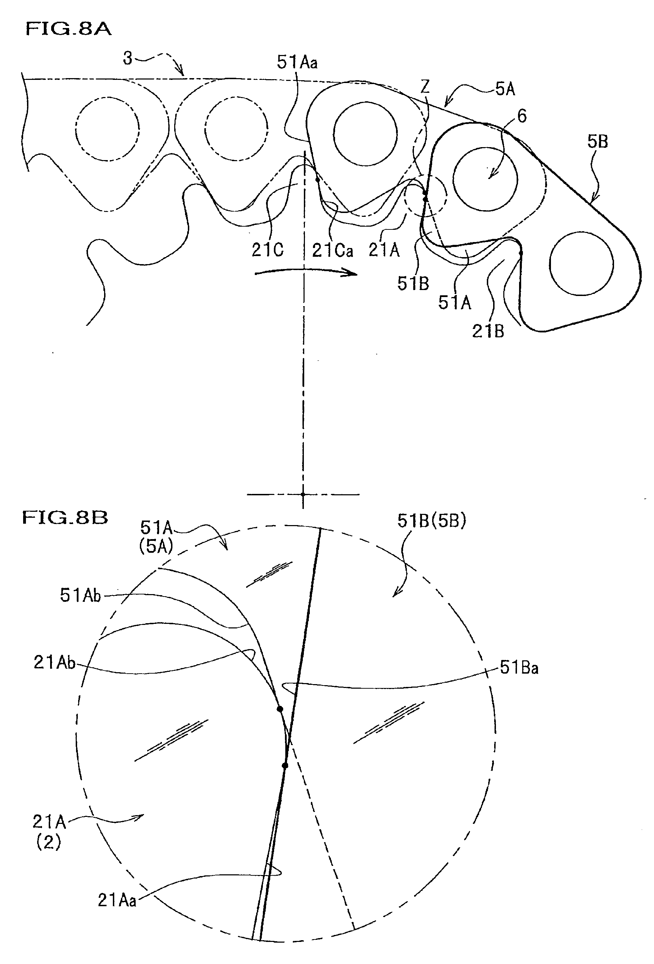

Fig. 8A is a side view showing a status where the engagement of the driven sprocket wheel and the silent chain has been further advanced. Fig. 8B is an enlarged view of the part Z shown in Fig. 8A.

The following description is made mainly on the link plate 5A which has just started to mesh with the sprocket wheel 2 and the link plate 5B which comes immediately before the link plate 5A

When the silent chain 3 is moved by the rotation of the sprocket wheel 2, firstly, the inside flank 51Ab of the front side tooth portion 51A of the link plate 5A comes in contact with the inner seating portion 21Ab which is formed on the tooth top side of the tooth portion 21A of the sprocket wheel 2 as shown in Figs. 6A and 6B.

At this time, since the linearly-formed outside flank 51Ba of the rear side tooth portion 51B of the link plate 5B is positioned inner than the inside flank 51Ab of the tooth portion 51A of the link plate 5A which is formed to be expanded in a curved shape as shown in Fig. 6B, the outside flank 51Ba does not come in contact with the tooth portion 21A of the sprocket wheel 2.

The inside flank 51Bb of the front side tooth portion 51B of the link plate 5B comes in contact with the inner seating portion 21Bb of the tooth portion 21B which comes immediately before the tooth portion 21A of the sprocket wheel 2 as shown in Fig. 6A.

When the sprocket wheel 2 is rotated further, the link plate 5A moves keeping its contact with the inner seating portion 21Ab of the tooth portion 21A as shown in Figs. 7A and 7B. In accordance with this movement, the link plate 5B is rotated around the connecting pin 6 to wind round the sprocket wheel 2, and the outside flank 51Ba of the rear side tooth portion 51B of the link plate 5B is seated on the outer seating portion 21Aa of the tooth portion 21A.

Thus, the link plate 5B is supported by the outer seating portion 21Aa of the tooth portion 21A at the rear side outside flank 51Ba and is also supported by the inner seating portion 21Bb of the tooth portion 21B at the front side inside flank 51Bb.

It is to be noted that the rear side outside flank 51Aa of the link plate 5A does not come in contact with the tooth portion 21C which comes immediately after the tooth portion 21A.

When the sprocket wheel 2 is rotated further, as shown in Figs. 8A and 8B, the link plate 5A moves keeping its contact with the inner seating portion 21Ab of the tooth portion 21A. In accordance with this movement, the link plate 5A is rotated around the rear side connecting pin 6, and the rear side outside flank 51Aa of the link plate 5A is seated on the outer seating portion 21Ca of the tooth portion 21C which comes immediately after the tooth portion 21A.

Thus, the link plate 5A is supported by the outside flank 21Ca of the tooth portion 21C at the rear side outside flank 51Aa and is also supported by the inner seating portion 21Ab of the tooth portion 21A at the front side inside flank 51Ab.

Continuously, the effect of the silent chain power transmitting device 1 according to this embodiment is described.

In accordance with the silent chain power transmitting device 1 of the embodiment, each link plate 5 is seated on the sprocket wheel 2 at two positions of the outside flank 51a and the inside flank 51b.

Therefore, the present invention increases the contact area between the link plate 5 and the sprocket wheel 2 compared with the conventional technique, which enables to disperse the contact surface pressure. Thus, it is possible to prevent early wear of the tooth portion 51 of the link plate 5 and the tooth portion 21 of the sprocket wheel 2.

As to the link plate 5, the front side inside flank 51b firstly comes in contact with the inner seating portion 21b of the tooth portion 21 of the sprocket wheel 2. Then, in accordance with the rotation of the sprocket wheel 2, while keeping the contact of the inside flank 51b, the rear side outside flank 51a of the link plate 5 is seated on the outer seating portion 21a of the tooth portion 21 which comes immediately after the tooth portion 21 with which the inside flank 51b comes in contact.

In other words, with regard to the link plate 5, firstly the front side inside flank 51b comes in contact with the inner seating portion 21b of the tooth portion 21 of the sprocket wheel 2, and then, in accordance with the rotation of the sprocket wheel 2, while the contact of the inside flank 51b is kept, the rear side outer portion 51a of a link plate 5 which comes immediately before the link plate 5 is seated on the outer seating portion 21a which is continuously formed at the tooth base side of the inner seating portion 21b.

More specifically, the silent chain power transmitting device 1 enables to seat the outside flank 51a while keeping the contact of the inside flank 51b by using the winding movement of the silent chain 3 around the sprocket wheel 2. Thus, the silent chain power transmitting device 1 can suppress polygonal movement of the silent chain 3 and smoothly seat the tooth portions 51, whereby the noise generated when the tooth portions 51are seated can be reduced.

The outside flank 51a and the inside flank 51b start to smoothly contact with the outside flank 21a and the inner seating portion 21b, respectively because the outer seating portion 21a of the tooth portion 21 of the sprocket wheel 2 is formed by using the outside flank rack 70 having substantially the same outer shape as the outside flank 51a of the link plate 5 and the inner seating portion 21b is formed by using the inside flank rack 80 having substantially the same shape as the inside flank 51b of the link plate 5. Therefore, it is possible to reduce the noise generated when the outside flank 51a and the inside flank 51b contact with the tooth portion 21 of the sprocket wheel 2.

Further, as the pitch of the tooth portions 21 of the sprocket wheel 2 is set to be smaller than that of the tooth portions 51 of the link plate 5, the tooth top of the tooth portions 21 of the sprocket wheel 2 does not come in contact with the bottom surface of the link plate 5 between the tooth portions 21.

Therefore, it is possible to reduce an impact and a noise generated when the tooth portions 51 and the tooth portions 21 are meshed.

Although the inner seating portion 21b which is formed on the tooth portion 21 of the sprocket wheel 2 is subjected to a high contact surface pressure from the time when the inside flank 51b of the link plate 5 starts to come in contact with the inner seating portion 21b to the time when the outside flank 51a of the link plate 5 is seated, the inner seating portion 21b can reduce the contact surface pressure compared with a tooth portion which is formed to be an involute tooth shape because the inner seating portion 21b is formed to be an arched tooth shape.

Thus, it is possible to reduce the wear of the tooth portion 21 of the sprocket wheel 2.

The best mode for carrying out the present invention has been described in detail with reference to the accompanying drawings. However, the present invention is not limited to this and may be modified without deviating from the spirit of the present invention.

For example, the number of the link plates 5 which are arranged in a width direction of the silent chain 3 is not limited, and may be set appropriately depending on a requirement.

With regard to the tooth portions 21 of the sprocket wheel 2, the outer seating portion 21a is formed by using the outside flank rack 70 having the same outer shape as the outside flank 51a of the link plate 5 and forming the inner seating portion 21b by using the inside flank rack 80 having the same outer shape as the inside flank 51b of the link plate 5 in the embodiment. However, the sprocket wheel 2 may be formed by a powder metallurgical process by using a mold which has the same shape as the sprocket wheel 2 formed as described above.

Continuously, examples of the present invention and a comparative example are described.

Figs. 9A to 9C are drawings showing a silent chain used in the examples of the present invention and the comparative example. Fig. 9A is a plain view of the silent chain; Fig. 9B is a side view of the silent chain; and Fig. 9C is an expanded perspective view of the silent chain.

### <Example 1>

As shown in Figs.9A to 9C, the silent chain 11 used in the example 1 is formed in such a manner that two link plates 12, 12 are arranged adjacent to each other to form a link train 13, link plates 15 and guide plates 14 are arranged opposite outer sides of the link train 13 to form guide trains 16, and the link trains 13 and the guide trains 16 are connected one another by pins 17 in a chain shape.

The shape of the outside flank of the tooth portions 121, 151 of the link plate 12, 15 are formed linearly, and the shape of the inside flank is formed to be a curved shape (an arched shape).

The link plate 12 of the link train 13 and the link plate 15 of the guide train 16 are formed to be the same shape except that their width is different. The width of the link plate 12 of the link train 13 is adapted to be 2.6mm. The width of the link plate 15 of the guide train 16 is adapted to be 1.4mm.

The guide plates 14 including pin holes of which diameter is a little smaller than the outer diameter of the pin 17 are arranged at both ends of the pin 17. The width of the guide plate 14 is adapted to be 1.2mm. It is to be noted that the guide plate 14 does not include a tooth portion.

The material of the link plates 12, 15 and a guide plate is carbon steel (S60C), and chromium carbide coating of equal to or more than 12µm is applied to the entire surface of the link plates 12, 15 and the guide plate so that the HRC rigidity is from 50 to 55. The material of the pin 17 is a bearing steel (SUJ2).

As a sprocket wheel of the example 1, a sprocket wheel is used in which the outer seating portion is formed by using an outside flank rack having the same outer shape as the outside flank of the link plates 12, 15, and the inner seating portion is formed by using an inside flank rack having the same outer shape as the inside flank of the link plates 12, 15 (see Fig. 5). The number of tooth portions of the sprocket wheel in the example 1 is 36.

The sprocket wheel is formed of chrome molybdenum steel (SCM) to which a carburizing hardening treatment has been applied. The diameter of the sprocket wheel is adapted to be ϕ79.515mm at the tooth base (ϕ87.525mm at the tooth top).

A sprocket wheel including thirty six tooth portions formed as described above is mounted on a driving shaft of the internal combustion engine, the silent chain 11 is wound around the driven sprocket wheel and the driving side sprocket wheel, and the driven sprocket wheel and the driving side sprocket wheel are continuously rotated for 83 hours while applying a tensile force of the 160kgf (1568N). Then, the shape of the tooth portion of the sprocket wheel is measured.

### <Example 2>

The measurement in the example 2 is carried out similarly to that of the example 1 except that the diameter of the sprocket wheel is adapted to be ϕ34.54mm at the tooth base (ϕ42.06 mm at the tooth top) and the number of the tooth portions is 18.

### <Example 3>

The measurement in the example 3 is carried out similarly to that of the example 1 except that the sprocket wheel is applied to an idler gear.

### <Comparative example 1>

The measurement of the comparative example 1 is carried out similarly to the example 1 except that (1) the inside flanks of the link plates 12, 15 are formed to be linear, and (2) the entire meshing surfaces of the tooth portions of the sprocket wheel are formed to be an involute shape.

It is to be noted that in such a silent chain power transmitting device, only the outside flank of the link plate is meshed with (seated on) the tooth portion of the sprocket wheel after the inside flank of the link plate comes in contact with the tooth portion of the sprocket wheel as disclosed in Patent document 2.

### <Comparative example 2>

The measurement of the comparative example2 is carried out similarly to the example 2 except that (1) the inside flanks of the link plates 12, 15 are formed to be linear, and (2) the entire meshing surfaces of the tooth portions of the sprocket wheel are formed to be an involute shape.

### <Comparative example 3>

The measurement of the comparative example 3 is carried out similarly to the example 3 except that (1) the inside flanks of the link plates 12, 15 are formed to be linear, and (2) the entire meshing surfaces of the tooth portions of the sprocket wheel are formed to be an involute shape.

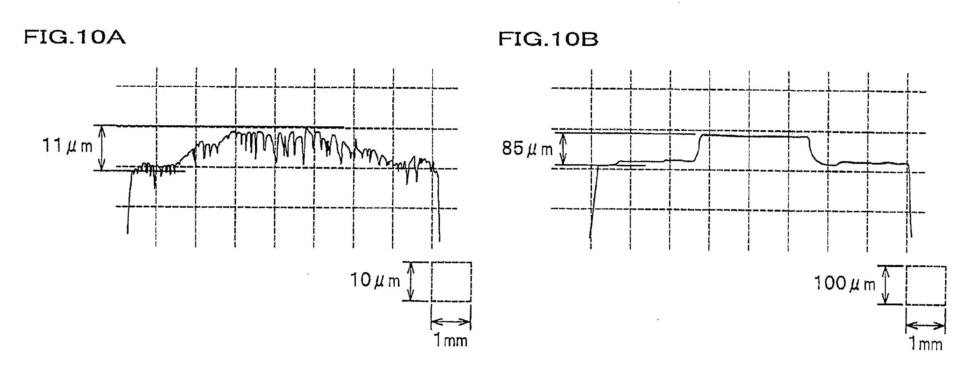

Fig. 10A is a cross-sectional view showing the wear loss amount of the tooth portion of the sprocket wheel according to the example 1. Fig. 10B is a cross-sectional view showing the wear loss amount of the tooth portion of the sprocket wheel according to the comparative example 1.

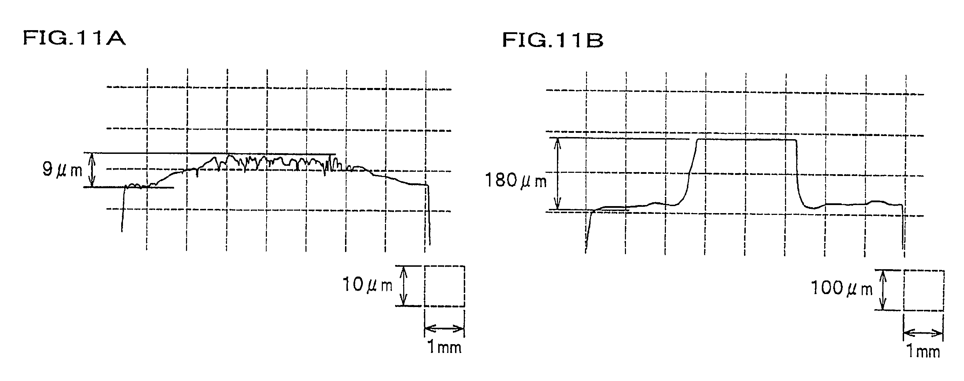

Fig. 11A is a cross-sectional view showing the wear loss amount of the tooth portion of the sprocket wheel according to the example 2. Fig. 11B is a cross-sectional view showing the wear loss amount of the tooth portion of the sprocket wheel according to the comparative example 2.

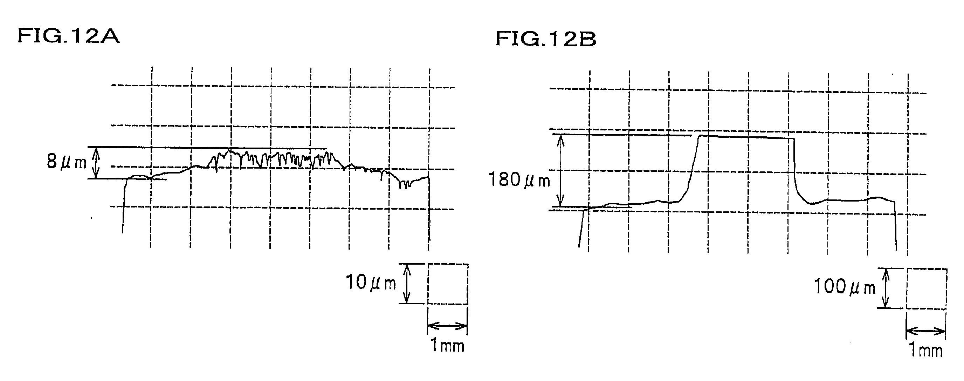

Fig. 12A is a cross-sectional view showing the wear loss amount of the tooth portion of the sprocket wheel according to the example 3. Fig. 12B is a cross-sectional view showing the wear loss amount of the tooth portion of the sprocket wheel according to the comparative example 3.

It is to be noted that in Fig. 10A, the reducing scale in the vertical direction is ten times smaller than that in Fig. 10B. This is also true for Figs. 11A and 11B and Figs. 12A and 12B.

As a result of the measurement, as shown in Figs. 10A to 12B, in every cases of the examples 1 to 3 and the comparative examples 1 to 3, there is shown a tendency that the wear loss amount of opposite ends of the tooth portion of the sprocket wheel with which the link plate 15 of the guide train 16 comes in contact is larger than that of the center part of the tooth portion of the sprocket wheel with which the link plate 12 comes in contact. This is thought to be because the width of the link plate 15 of the guide train 16 which is arranged on the opposite ends is smaller than that of the guide plate 12 of the link train 13 which is arranged at the center part of the tooth portion.

Table 1 shows a list of wear-loss amount of the cross section of the tooth portion of the sprocket wheel of the examples 1 to 3 and the comparative examples 1 to 3.

**[Table 1]**

| Gear Type | Wear Loss Amount | | | |
|---|---|---|---|---|
| 36T Sprocket wheel | Example 1 | 11µm | Comparative example 1 | 85µm |
| 18T Sprocket wheel | Example 2 | 9µm | Comparative example 2 | 180µm |
| Idler gear | Example 3 | 8pm | Comparative example 3 | 180µm |

As shown in Table 1, the wear loss amount in the example 1 is about 11µm, which is one-eighth of the wear loss amount (55µm) of the comparative example 1. The wear-loss amount in the example 2 is about 9µm, which is one-twentieth of the wear-loss amount (180µm) of the comparative example 2. The wear-loss amount in the example 3 is about 8µm, which is one-twentieth of the wear-loss amount (180µm) of the comparative example 3.

This is considered to be because the four link plates come in contact with the meshing surface of the tooth portion of the sprocket wheel at the same time in the examples 1 to 3, while only two link plates come in contact with a meshing surface of the tooth portion of the sprocket wheel in the comparative examples 1 to 3, whereby the contact surface pressure is higher in the comparative examples 1 to 3.

### DESCRIPTION OF THE REFERENCE NUMERALS

- 1: Silent chain power transmitting device
- 2: Sprocket wheel
- 21: Tooth portion
- 21a: Outer seating portion
- 21b: Inner seating portion
- 3: Silent chain
- 5: Link plate
- 51: Tooth portion
- 52: Pin hole
- 51a: Outside flank
- 51b: Inside flank
- 6: Connecting pin
- 7: Outside flank link plate
- 8: Inside flank link plate
- 70: Outside flank rack
- 80: Inside flank rack

## Claims

1. A silent chain power transmitting device, comprising:
a silent chain (3) which is formed in such a manner that a plurality of link plates(5) is connected with one another by connecting pins (6) in a chain shape, each of the link plates (5, 5A, 5B) having a pair of tooth portions (51) and a pair of pin holes (52) into which the connecting pins (6) are loosely fit, and
a sprocket wheel (2) which includes on its circumference a plurality of tooth portions (21) which meshes with the tooth portions (51) of the silent chain (3), wherein
a meshing surface of each tooth portion (21) of the sprocket wheel (23) includes a plurality of seating portions (21a, 21 b), each of which is formed in a different tooth shape,
**characterized in that**
the plurality of the seating portions comprises an inner seating portion (21 b) on which an inside flank (51 b) of a first link plate (5A) is seated and an outer seating portion (21 a) on which an outside flank (51 a) of a second link plate (5B), which is adjacent to the first link plate (5A) with respect to the longitudinal direction of the silent chain (3), is seated, wherein the outer seating portion (21 a) has a shape which is formed by using an outside flank rack (70) having the same shape as an outer shape of ideal outside flank link plates (7) formed when the ideal link plates are arranged linear, each of the ideal outside flank link plates (7) having an inside flank (7D) and an outside flank (7C) having the same shape as the outside flank of the link plate (5), and
the inner seating portion (21 b) has a shape which is formed by using an inside flank rack (80) having the same shape as an outer shape of ideal inside flank link plates (8) formed when the ideal inside flank link plates (8) are arranged linear, each of the ideal inside flank link plates (8) including an inside flank (8D) and an outside flank(8C) having the same shape as the inside flank of the link plate.

2. The silent chain power transmitting device according to Claim 1, wherein the inner seating portion (21 b) is formed continuously on a tooth top side of the outer seating portion (21a).

## Patentansprüche

1. Geräuscharme Ketten-Kraftübertragungsvorrichtung umfassend:
eine geräuscharme Kette (3), die derart ausgebildet ist, dass eine Mehrzahl von Gliedplatten (5) durch Verbindungsstifte (6) zu einer Kettenform miteinander verbunden sind, wobei jede der Gliedplatten (5, 5A, 5B) ein Paar von Zahnabschnitten (51) und ein Paar von Stiftlöchern (52) aufweist, in die die Verbindungsstifte (6) lose eingesetzt sind, und
ein Ritzelrad (2), das auf seinem Umfang eine Mehrzahl von Zahnabschnitten (21) enthält, die mit den Zahnabschnitten (51) der geräuscharmen Kette (3) in Eingriff stehen, worin
die Eingriffsoberfläche jedes Zahnabschnitts (21) des Ritzelrads (23) eine Mehrzahl von Sitzabschnitten (21A, 21 B) enthält, von denen jeder mit einer unterschiedlichen Zahnform ausgebildet ist,
**dadurch gekennzeichnet, dass**
die Mehrzahl der Sitzabschnitte einen inneren Sitzabschnitt (21 B), auf dem eine innere Flanke (51 b) einer ersten Gliedplatte (5A) sitzt, und einen äußeren Sitzabschnitt (21 a), auf dem eine äußere Flanke (51 a) einer zweiten Gliedplatte (5B) sitzt, die der ersten Gliedplatte (5A) in Bezug auf die Längsrichtung der geräuscharmen Kette (3) benachbart ist, aufweist, worin
der äußere Sitzabschnitt (21 a) eine Form hat, die unter Verwendung einer äußeren Zahnflanke (70) gebildet ist, die die gleiche Form wie eine Außenform von idealen Außenflanken-Gliedplatten (7) hat, die gebildet wird, wenn die idealen Gliedplatten linear angeordnet sind, wobei jede der idealen Außenflanken-Gliedplatten (7) eine innere Flanke (7D) und eine äußere Flanke (7C) mit der gleichen Form wie die äußere Flanke der Gliedplatte (5) aufweist, und
der innere Sitzabschnitt (21 b) eine Form hat, die unter Verwendung einer inneren Zahnflanke (80) gebildet wird, welche die gleiche Form wie eine Außenform von idealen Innenflanken-Gliedplatten (8) hat, die gebildet wird, wenn die idealen Innenflanken-Gliedplatten (8) linear angeordnet sind, wobei jede der idealen Innenflanken-Gliedplatten (8) eine innere Flanke (8D) und eine äußere Flanke (8C) mit der gleichen Form wie die innere Flanke der Gliedplatte aufweist.

2. Die geräuscharme Ketten-Kraftübertragungsvorrichtung nach Anspruch 1, worin der innere Sitzabschnitt (21 b) an einer Zahnoberseite des äußeren Sitzabschnitts (21 a) kontinuierlich ausgebildet ist.

## Revendications

1. Dispositif de transmission de puissance de chaîne silencieuse, comprenant:
une chaîne silencieuse (3) qui est formée de telle sorte qu'une pluralité de plaques de raccordement (5) soient connectées les unes aux autres par des broches de connexion (6) en une forme de chaîne, chacune des plaques de raccordement (5, 5A, 5B) présentant une paire de parties de dent (51) et une paire de trous de broche (52) dans lesquels les broches de connexion (6) sont agencées librement, et
une roue dentée (2) qui comporte sur sa circonférence une pluralité de parties de dent (21) qui engrènent avec les parties de dent (51) de la chaîne silencieuse (3), dans lequel:
une surface d'engrènement de chaque partie de dent (21) de la roue dentée (23) présente une pluralité de parties d'appui (21a, 21b), chacune de celles-ci ayant la forme d'une forme de dent différente,
**caractérisé en ce que**:
la pluralité des parties d'appui comprend une partie d'appui intérieure (21b) sur laquelle un flanc intérieur (51b) d'une première plaque de raccordement (5A) est appuyé, et une partie d'appui extérieure (21a) sur laquelle un flanc extérieur (51a) d'une deuxième plaque de raccordement (5B), qui est adjacente à la première plaque de raccordement (5A) par rapport à la direction longitudinale de la chaîne silencieuse (3), est appuyé, dans lequel la partie d'appui extérieure (21a) présente une forme qui est formée en utilisant une crémaillère de flanc extérieure (70) qui a la même forme qu'une forme extérieure de plaques de raccordement à flanc extérieur idéales (7) qui est formée lorsque les plaques de raccordement idéales sont disposées de façon linéaire, chacune des plaques de raccordement de flanc extérieur idéales (7) présentant un flanc intérieur (7D) et un flanc extérieur (7C) qui ont la même forme que le flanc extérieur de la plaque de raccordement (5), et
la partie d'appui intérieure (21b) présente une forme qui est formée en utilisant une crémaillère de flanc intérieure (80) qui présente la même forme qu'une forme extérieure de plaques de raccordement à flanc intérieur idéales (8) qui est formée lorsque les plaques de raccordement à flanc intérieur idéales (8) sont disposées de façon linéaire, chacune des plaques de raccordement à flanc intérieur idéales (8) comprenant un flanc intérieur (8D) et un flanc extérieur (8C) qui ont la même forme que le flanc intérieur de la plaque de raccordement.

2. Dispositif de transmission de puissance de chaîne silencieuse selon la revendication 1, dans lequel la partie d'appui (21b) est formée de façon continue sur un côté supérieur denté de la partie d'appui extérieure (21a).
